# EUROPÄISCHE PATENTANMELDUNG

(11) **EP 2 128 568 A1**
(43) Veröffentlichungstag der Anmeldung: **02.12.2009**
(21) Anmeldenummer: 09100275.8
(22) Anmeldetag: 11.05.2009
(51) Int. Cl.: G01C 21/34

(54) **Verfahren zum Festlegen einer Route in einem Navigationssystem**

(30) Priorität: 26.05.2008 DE 102008025130
(71) Anmelder: Continental Automotive GmbH, 30165 Hannover (DE)
(72) Erfinder: Krekels, Hans-Gerd, 64380, Roßdorf (DE); Windl, Helmut, 93077, Bad Abbach (DE)

(57) **Zusammenfassung**

Die Erfindung betrifft ein Navigationssystem (7) und ein Verfahren zum Festlegen einer neuen Route in einem Navigationssystem, wobei, falls festgestellt wird, dass eine bereits vorher vom Navigationssystem (7) festgelegte erste Route (2) vom Navigationssystem (7) räumlich verlassen wurde, entschieden wird, ob angenommen wird, dass die erste Route (2) aufgrund eines Verkehrshindernisses (5) verlassen wurde, wobei, falls entschieden wird, dass dies angenommen wird, eine neue Route (6) unter Berücksichtigung des Verkehrshindernisses (5) festgelegt wird.

## Beschreibung

Die Erfindung betrifft Verfahren zum Festlegen einer neuen Route in einem Navigationssystem und Navigationssysteme.

Navigationssysteme zum Vorschlagen einer Route und zum Ausgeben von Navigationsbefehlen (wie links abbiegen, rechts abbiegen, geradeaus fahren) an einen Benutzer eines Navigationssystems sind an sich bekannt, beispielsweise durch die Dayton-Produkte und andere Produkte aus dem Konzern der Anmelderin (s. a. www.vdo.de).

Wenn ein Fahrzeug mit einem Navigationssystem eine vom Navigationssystem berechnete erste Route verlässt versucht das Navigationssystem üblicherweise das Fahrzeug zu dieser Route zurückzulotsen falls dem Navigationssystem (z. B. aus RDS-TMC etc.) nicht ein Verkehrshindernis (Stau, verlangsamter Verkehr) in Fahrtrichtung auf dieser Route bekannt ist. Jedoch kann ein Grund für das Verlassen der Route durch den Fahrer des Fahrzeuges auch sein, dass diese geplante erste Route aufgrund einer Straßensperrung oder eines anderen, dem Navigationssystem nicht bekannten Verkehrshindernisses erfolgt. In diesem Fall kann ein Zurück-Lotsen des Fahrzeuges durch das Navigationssystem zur geplanten ersten Route suboptimal sein.

Existierende Systeme können eine Funktion besitzen, die es ermöglicht, einen in Fahrtrichtung liegenden Streckenabschnitt auf der bisher geplanten ersten Route als nicht passierbar zu kennzeichnen, indem ein nicht passierbarer Streckenabschnitt eingebbarer Länge (z. B. 500 m, 1000 m, 700 m) dem Navigationssystem als nicht passierbar angegeben wird, worauf das Navigationssystem eine diesen Streckenabschnitt umgehende neue Route festlegt. Dies ist vor allem hilfreich falls der Fahrer des Fahrzeuges z. B. vor der Routenplanung durch sein Radio eine Staumeldung erfährt, oder falls ihm eine vorher angekündigte Streckensperrung z. B. aus einer Zeitung bekannt ist. Falls aber ein Verkehrshindernis plötzlich auftaucht, so dass eine Eingabe durch den Fahrer vor der Routenplanung nicht erfolgte, wird dieses nicht in der Festlegung einer Route berücksichtigt, sondern es wird versucht zur bisher geplanten ersten Route zurückzukehren.

Aus EP 0 854 352 A2 ist bekannt, beim Verlassen einer vom Navigationssystem festgelegten Route das Navigationssystem abzuschalten. Dies vermeidet erfolgreich, dass der Fahrer mit ungeeigneten Routenvorschlägen belästigt wird.

Als eine Aufgabe der Erfindung kann es angesehen werden, geeignet auf ein Verlassen einer von einem Navigationssystem festgelegten Route zu reagieren. Die Aufgabe wird jeweils durch die Gegenstände der unabhängigen Patentansprüche gelöst. Vorteilhafte Ausgestaltungen sind in den Unteransprüchen angegeben.

Ein Aspekt der Erfindung gemäß dem Patentanspruch 1 betrifft ein Verfahren zum Festlegen einer neuen Route in einem Navigationssystem, wobei falls festgestellt wird, dass eine bereits vorher vom Navigationssystem festgelegte erste Route vom Navigationssystem räumlich verlassen wurde, entschieden wird, ob angenommen wird, dass die erste Route aufgrund eines Verkehrshindernisses verlassen wurde, wobei falls entschieden wird, dass dies angenommen wird, eine neue Route unter Berücksichtigung des Verkehrshindernisses festgelegt wird.

Vorzugsweise wird, bevor entschieden wird, eine Rückfrage ausgegeben, ob das Verlassen der ersten Route aufgrund eines Verkehrshindernisses erfolgte, wobei in Abhängigkeit von einer danach erfolgenden Eingabe in das Navigationssystem entweder eine neue Route unter Berücksichtigung des Verkehrshindernisses festgelegt wird, oder eine neue Route ohne Berücksichtigung des Verkehrshindernisses festgelegt wird.

Vorzugsweise wird dies entschieden, ohne dass eine Rückfrage dahingehend ausgegeben wird, ob das Verlassen der Route aufgrund eines Verkehrshindernisses erfolgte, falls aufgrund von vorgegebenen Parametern entschieden wird, dass die erste Route aufgrund eines Verkehrshindernisses auf einem noch zu befahrenden Streckenabschnitt der ersten Route verlassen wurde.

Vorzugsweise wird, falls aufgrund von vorgegebenen Parametern entschieden wird, dass die erste Route aufgrund eines Verkehrshindernisses auf einem noch zu befahrenden Streckenabschnitt der ersten Route verlassen wurde, eine neue Route unter Berücksichtigung des deshalb angenommenen Verkehrshindernisses festgelegt, während sonst eine neue Route ohne Berücksichtigung dieses Verkehrshindernisses auf einem noch zu befahrenden Streckenabschnitt der ersten Route festgelegt wird.

Vorzugsweise wird, falls nicht in einem vorgegebenen Zeitraum vor dem Verlassen der Route ein Navigationsbefehl vom Navigationssystem ausgegeben wurde, dessen Nichtbefolgung aufgrund der Position und/oder Bewegungsrichtung des Navigationssystems festgestellt wurde, eine neue Route unter Berücksichtigung des deshalb angenommenen Verkehrshindernisses festgelegt, während sonst eine neue Route ohne Berücksichtigung eines Verkehrshindernisses festgelegt wird.

Vorzugsweise wird, falls kein Navigationsbefehl in einem vorgegebenen Zeitraum vor dem festgestellten Verlassen der ersten Route ausgegeben wurde, entschieden, dass kein Verkehrshindernis auf der ersten Route vorliegt.

Das Verkehrshindernis kann auf einem noch nicht befahrenen Streckenabschnitt der ersten Route liegen.

Das Verkehrshindernis kann ein Unfall oder Stau oder anderes Verkehrhindernis sein.

Vorzugsweise umfasst die Berücksichtigung eines Verkehrshindernisses beim Festlegen der neuen Route, dass soweit möglich ein noch zu befahrender Streckenabschnitt der ersten Route, von dem abgewichen wurde, auf einer vorgebbaren Länge nicht in die neue Route aufgenommen wird, sondern dieser Streckenabschnitt in der neuen Route durch andere Streckenabschnitte umgangen wird.

Vorzugsweise wird dieser Streckenabschnitt in der neuen Route durch andere Streckenabschnitte so umgangen, dass der Streckenabschnitt auf einer vorgegebenen Länge von etwa 1 km nicht benutzt wird.

Vorzugsweise wird dieser Streckenabschnitt in der neuen Route durch andere Streckenabschnitte so umgangen, dass die Länge der anderen Streckenabschnitte mit welchen der Streckenabschnitt umgangen wird zusammen nicht mehr als das Produkt eines vorgegebenen Faktors und der Länge des Streckenabschnittes aufweisen.

Vorzugsweise wird dieser Streckenabschnitt in der neuen Route durch andere Streckenabschnitte so umgangen, dass die Länge der anderen Streckenabschnitte, mit welchen der Streckenabschnitt umgangen wird, zusammen nicht mehr als 170 % der Länge des Streckenabschnittes aufweisen.

Vorzugsweise wird dieser Streckenabschnitt in der neuen Route durch andere Streckenabschnitte so umgangen, dass die berechnete voraussichtliche Fahrdauer für die anderen Streckenabschnitte, mit welchen der Streckenabschnitt umgangen wird, zusammen nicht mehr als das Produkt eines vorgegebenen Faktors und der berechneten voraussichtlichen Fahrdauer des Streckenabschnittes aufweisen.

Vorzugsweise wird dieser Streckenabschnitt in der neuen Route durch andere Streckenabschnitte so umgangen, dass die berechnete voraussichtliche Fahrdauer für die anderen Streckenabschnitte, mit welchen der Streckenabschnitt umgangen wird, zusammen nicht mehr als 170 % der berechneten voraussichtlichen Fahrdauer des Streckenabschnittes aufweisen.

Vorzugsweise wird, falls jedoch eine der genannten Bedingungen nicht eingehalten werden kann, eine neue Route ohne diese Bedingungen festgelegt.

Ein weiterer Aspekt der Erfindung betrifft ein Speichermedium.

Ein weiterer Aspekt der Erfindung betrifft ein Navigationssystem zum Festlegen einer neuen Route,
- mit einer Routenberechnungseinrichtung zum Festlegen einer Route zu einem Ziel,
- mit einer Zielabweichungsdetektionseinrichtung zum Detektieren des Verlassens der Route,
- mit einer Verkehrshindernisentscheidungseinrichtung zum Entscheiden, ob die Route aufgrund eines Verkehrshindernisses verlassen wurde,
wobei die Routenberechnungseinrichtung dazu ausgebildet ist, nach einer Entscheidung der Verkehrshindernisentscheidungseinrichtung dahingehend, dass die Route aufgrund eines Verkehrshindernisses verlassen wurde, eine neue Route unter Berücksichtigung des Verkehrshindernisses festzulegen.

Weitere Merkmale und Vorteile der Erfindung ergeben sich aus der nachfolgenden Beschreibung eines Ausführungsbeispiels anhand der Zeichnung. Dabei zeigt:
- Fig. 1: schematisch von einem Navigationssystem vorgeschlagene Routen,
- Fig. 2: schematisch Komponenten eines Navigationssystems.

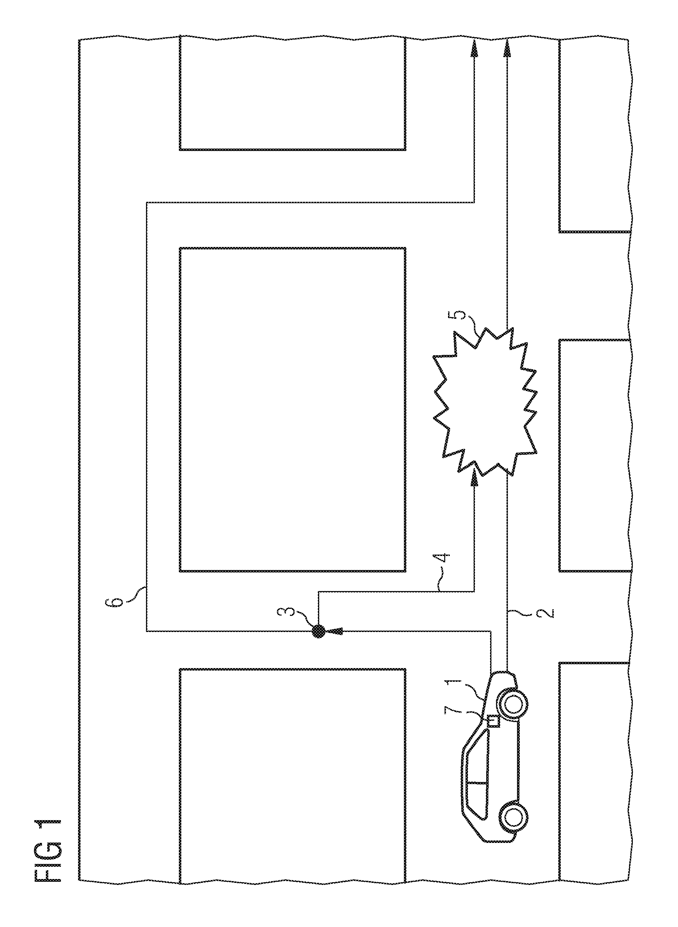

Fig. 1 zeigt ein Fahrzeug 1, welches sich entlang einer von einem Navigationssystem im Fahrzeug 1 vorgeschlagenen Route bewegt. Dabei erfasst das Navigationssystem laufend z. B. durch satellitengestützte Navigation (GPS) und/oder aufgrund Koppelnavigation (Verfolgung der Lenkrichtung und/oder gefahrenen Strecke laut Kilometerzähler etc.) und/oder Karten die aktuelle Position des Navigationssystems.

Wenn das Fahrzeug aufgrund eines Verkehrshindernisses 5 (z. B. eines Loches in der Straße oder Staus oder Unfalls oder einer Wegsperrung) die vom Navigationssystem geplante erste Route 2 verlässt, stellt dies das Navigationssystem z. B. dadurch fest, dass es detektiert an einer Position 3 zu sein, welche nicht auf der geplanten ersten Route liegt.

Das Navigationssystem könnte versuchen, das Fahrzeug 1 mit dem Navigationssystem 7 wieder auf der alternativen Route 4 zur geplanten Route 2 (durch Vorschlag eines Wendemanövers) zurückzulotsen, wo es wieder das Verkehrshindernis 5 vor sich hat.

Erfindungsgemäß wird jedoch, falls festgestellt wird, dass eine bereits vorher vom Navigationssystem festgelegte erste Route vom Navigationssystem räumlich verlassen wurde, entschieden, ob angenommen wird, dass die erste Route 2 aufgrund eines Verkehrshindernisses 5 verlassen wurde, wobei falls entschieden wird, dass dies angenommen wird, eine neue Route 6 unter Berücksichtigung des Verkehrshindernisses 5 festgelegt wird.

Diese Entscheidung kann aufgrund unterschiedlicher Parameter erfolgen. Zum Beispiel kann entschieden werden, dass die erste Route 2 wegen eines Verkehrshindernisses 5 verlassen wurde, weil die erste Route verlassen wurde, obwohl in einer vorgegebenen Zeit (z. B. 7 Sekunden) vor dem Verlassen der ersten Route kein Navigationsbefehl ausgegeben wurde.

Oder es kann z. B. entschieden werden, dass die erste Route 2 wegen eines Verkehrshindernisses 5 verlassen wurde, weil die erste Route verlassen wurde und dabei ein in einer vorgegebenen Zeit (z. B. 7 Sekunden) vor dem Verlassen der ersten Route ausgegebener Navigationsbefehl an den Fahrer des Fahrzeuges (wie "geradeaus") missachtet wurde.

Oder es kann aufgrund anderer im Navigationssystem zusätzlich oder stattdessen vorgegebener Parameter entschieden werden.

Vor einer Entscheidung kann generell oder wenn nicht aufgrund von Parametern ein Verkehrshindernis angenommen wird der Fahrer gefragt werden, ob die Route wegen eines Verkehrshindernisses verlassen wurde.

Die Planung der neuen Route durch das Navigationssystem kann mit unterschiedlichen einzeln oder in Kombination berücksichtigbaren Parametern erfolgen:

Zum Beispiel kann die Berücksichtigung eines Verkehrshindernisses beim Festlegen der neuen Route umfassen, dass soweit möglich ein noch zu befahrender Streckenabschnitt 8 der ersten Route, von dem abgewichen wurde, auf einer vorgebbaren Länge (z. B. 1 km) nicht in die neue Route 6 aufgenommen wird, sondern dieser Streckenabschnitt 8 in der neuen Route 6 durch andere Streckenabschnitte umgangen wird.

Auch ist es möglich, dass dieser Streckenabschnitt mit einem Verkehrshindernis 5 in der neuen Route 6 durch andere Streckenabschnitte so umgangen wird, dass die Länge der anderen Streckenabschnitte, mit welchen der Streckenabschnitt umgangen wird, zusammen nicht mehr als das Produkt eines vorgegebenen Faktors und der Länge des Streckenabschnittes aufweisen, z. B. nicht mehr als 170 % der Länge des Streckenabschnittes 8.

Auch ist es möglich, dass dieser Streckenabschnitt in der neuen Route durch andere Streckenabschnitte so umgangen wird, dass die berechnete voraussichtliche Fahrdauer für die anderen Streckenabschnitte, mit welchen der Streckenabschnitt umgangen wird, zusammen nicht mehr als das Produkt eines vorgegebenen Faktors (z. B. 170 %) und der berechneten voraussichtlichen Fahrdauer des Streckenabschnittes aufweisen.

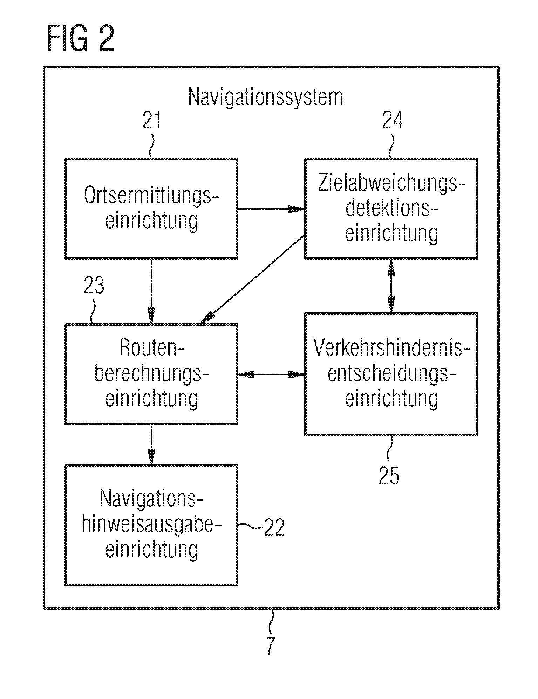

Fig. 2 zeigt schematisch ein Navigationssystem 7 zum Festlegen einer neuen Route,
- mit einer Ortermittlungseinrichtung 21 zum Ermitteln des aktuellen Ortes des Navigationssystems durch z. B. GPS etc.,
- mit einer Navigationshinweisausgabeeinrichtung 22 umfassend z. B. einen Lautsprecher und/oder ein Routendisplay,
- mit einer Routenberechnungseinrichtung 23 zum Festlegen einer Route (4, 6) zu einem Ziel,
- mit einer Zielabweichungsdetektionseinrichtung 24 zum Detektieren des Verlassens der Route,
- mit einer Verkehrshindernisentscheidungseinrichtung 25 zum Entscheiden, ob die Route aufgrund eines Verkehrshindernisses verlassen wurde,
wobei die Routenberechnungseinrichtung nach einer Entscheidung der Verkehrshindernisentscheidungseinrichtung 25 dahingehend, dass die erste Route aufgrund eines Verkehrshindernisses verlassen wurde, eine neue Route unter Berücksichtigung des Verkehrshindernisses festlegt.

Die Ortermittlungseinrichtung 21 teilt den aktuellen Ort (3) des Navigationssystems 7 der Routenberechnungseinrichtung 23 mit, die eine Route zu einem vom Fahrer eines Fahrzeuges eingegebenen Ziel berechnet und Navigationshinweise, die den Fahrer zu dem Ziel entlang der Route (6) führen sollen, über die Navigationshinweisausgabeeinrichtung 22 ausgibt.

Falls die Zielabweichungsdetektionseinrichtung 24 aufgrund eines von der Ortermittlungseinrichtung 21 festgestellten Ortes außerhalb einer ersten Route ein Verlassen der ersten Route detektiert, informiert sie die Verkehrshindernisentscheidungseinrichtung 25, welche entscheidet, ob die Route aufgrund eines Verkehrshindernisses verlassen wurde und welche die Routenberechnungseinrichtung 23 gegebenenfalls zum Festlegen einer neuen Route veranlasst.

## Patentansprüche

1. Verfahren zum Festlegen einer neuen Route (6) in einem Navigationssystem (7), wobei, falls festgestellt wird, dass eine bereits vorher vom Navigationssystem (7) festgelegte erste Route (2) vom Navigationssystem (7) räumlich verlassen wurde, entschieden wird, ob angenommen wird, dass die erste Route (2) aufgrund eines Verkehrshindernisses (5) verlassen wurde, wobei, falls entschieden wird (25), dass dies angenommen wird, eine neue Route (6) unter Berücksichtigung des Verkehrshindernisses (5) festgelegt wird.

2. Verfahren nach Anspruch 1, wobei, bevor dies entschieden wird, eine Rückfrage ausgegeben wird, ob das Verlassen der ersten Route aufgrund eines Verkehrshindernisses erfolgte, wobei in Abhängigkeit von einer danach erfolgenden Eingabe in das Navigationssystem (7) entweder eine neue Route (6) unter Berücksichtigung des Verkehrshindernisses (5) festgelegt wird, oder eine neue Route (6) ohne Berücksichtigung des Verkehrshindernisses (5) festgelegt wird.

3. Verfahren nach einem der vorhergehenden Ansprüche, wobei dies entschieden wird, ohne dass eine Rückfrage dahingehend ausgegeben wird, ob das Verlassen der Route aufgrund eines Verkehrshindernisses (5) erfolgte, falls aufgrund von vorgegebenen Parametern entschieden wird, dass die erste Route aufgrund eines Verkehrshindernisses (5) auf einem noch zu befahrenden Streckenabschnitt der ersten Route verlassen wurde.

4. Verfahren nach einem der vorhergehenden Ansprüche, wobei, falls aufgrund von vorgegebenen Parametern entschieden wird, dass die erste Route (2) aufgrund eines Verkehrshindernisses (5) auf einem noch zu befahrenden Streckenabschnitt (8) der ersten Route verlassen wurde, eine neue Route (6) unter Berücksichtigung des deshalb angenommenen Verkehrshindernisses (5) festgelegt wird, während sonst eine neue Route (6) ohne Berücksichtigung dieses Verkehrshindernisses (5) auf einem noch zu befahrenden Streckenabschnitt der ersten Route festgelegt wird.

5. Verfahren nach einem der vorhergehenden Ansprüche, wobei, falls in einem vorgegebenen Zeitraum vor dem Verlassen der Route ein Navigationsbefehl vom Navigationssystem (7) ausgegeben wurde, dessen Nichtbefolgung aufgrund der Position und/oder Bewegungsrichtung des Navigationssystems festgestellte wurde, eine neue Route (6) unter Berücksichtigung des deshalb angenommenen Verkehrshindernisses (5) festgelegt wird, während sonst eine neue Route (6) ohne Berücksichtigung eines Verkehrshindernisses (5) festgelegt wird.

6. Verfahren nach einem der vorhergehenden Ansprüche, wobei, falls kein Navigationsbefehl in einem vorgegebenen Zeitraum vor dem festgestellten Verlassen der ersten Route ausgegeben wurde, entschieden wird, dass ein Verkehrshindernis (5) auf der ersten Route vorliegt.

7. Verfahren nach einem der vorhergehenden Ansprüche, wobei das Verkehrshindernis (5) auf einem noch nicht befahrenen Streckenabschnitt der ersten Route liegt.

8. Verfahren nach einem der vorhergehenden Ansprüche, wobei die Berücksichtigung eines Verkehrshindernisses (5) beim Festlegen der neuen Route umfasst, dass soweit möglich ein noch zu befahrender Streckenabschnitt (8) der ersten Route, von dem abgewichen wurde, auf einer vorgebbaren Länge nicht in die neue Route (6) aufgenommen wird, sondern dieser Streckenabschnitt (8) in der neuen Route durch andere Streckenabschnitte umgangen wird.

9. Verfahren nach Anspruch 8, wobei dieser Streckenabschnitt (8) in der neuen Route durch andere Streckenabschnitte so umgangen wird, dass die Länge der anderen Streckenabschnitte, mit welchen der Streckenabschnitt (8) umgangen wird, zusammen nicht mehr als das Produkt eines vorgegebenen Faktors und der Länge oder der berechneten voraussichtlichen Fahrtdauer des Streckenabschnittes aufweisen.

10. Navigationssystem (7) zum Festlegen einer Route (6),
- mit einer Routenberechnungseinrichtung (23) zum Festlegen einer ersten Route (2) zu einem Ziel,
- mit einer Zielabweichungsdetektionseinrichtung (24) zum Detektieren des Verlassens der ersten Route (2),
- mit einer Verkehrshindernisentscheidungseinrichtung (25) zum Entscheiden, ob die erste Route (2) aufgrund eines Verkehrshindernisses (5) verlassen wurde,
wobei die Routenberechnungseinrichtung (23) dazu ausgebildet ist, nach einer Entscheidung der Verkehrshindernisentscheidungseinrichtung (25) dahingehend, dass die erste Route (2) aufgrund eines Verkehrshindernisses (5) verlassen wurde, eine neue Route (6) unter Berücksichtigung des Verkehrshindernisses (5) festzulegen.

11. Navigationssystem nach Anspruch 10, wobei die Verkehrshindernisentscheidungseinrichtung (25) so ausgebildet ist, dass, bevor dies entschieden wird, eine Rückfrage ausgegeben wird, ob das Verlassen der ersten Route aufgrund eines Verkehrshindernisses (5) erfolgte, wobei in Abhängigkeit von einer danach erfolgenden Eingabe in das Navigationssystem (7) entweder eine neue Route (6) unter Berücksichtigung des Verkehrshindernisses (5) festgelegt wird, oder eine neue Route (6) ohne Berücksichtigung des Verkehrshindernisses (5) festgelegt wird.

12. Navigationssystem nach einem der Ansprüche 10 bis 11, wobei die Verkehrshindernisentscheidungseinrichtung (25) so ausgebildet ist, dass dies entschieden wird, ohne dass eine Rückfrage dahingehend ausgegeben wird, ob das Verlassen der Route aufgrund eines Verkehrshindernisses (5) erfolgte, falls aufgrund von vorgegebenen Parametern entschieden wird, dass die erste Route (2) aufgrund eines Verkehrshindernisses (5) auf einem noch zu befahrenden Streckenabschnitt (8) der ersten Route verlassen wurde.

13. Navigationssystem nach einem der Ansprüche 10 bis 12, wobei die Verkehrshindernisentscheidungseinrichtung (25) so ausgebildet ist, dass, falls aufgrund von vorgegebenen Parametern entschieden wird, dass die erste Route (2) aufgrund eines Verkehrshindernisses (5) auf einem noch zu befahrenden Streckenabschnitt (8) der ersten Route verlassen wurde, eine neue Route (6) unter Berücksichtigung des deshalb angenommenen Verkehrshindernisses (5) festgelegt wird, während sonst eine neue Route (6) ohne Berücksichtigung dieses Verkehrshindernisses (5) auf einem noch zu befahrenden Streckenabschnitt (8) der ersten Route festgelegt wird.

14. Navigationssystem nach einem der Ansprüche 10 bis 13, wobei die Verkehrshindernisentscheidungseinrichtung (25) so ausgebildet ist, dass, falls in einem vorgegebenen Zeitraum vor dem Verlassen der Route ein Navigationsbefehl vom Navigationssystem (7) ausgegeben wurde, dessen Nichtbefolgung aufgrund der Position und/oder Bewegungsrichtung des Navigationssystems festgestellte wurde, eine neue Route (6) unter Berücksichtigung des deshalb angenommenen Verkehrshindernisses (5) festgelegt wird, während sonst eine neue Route (6) ohne Berücksichtigung eines Verkehrshindernisses (5) festgelegt wird.

15. Navigationssystem nach einem der Ansprüche 10 bis 14, wobei die Verkehrshindernisentscheidungseinrichtung (25) so ausgebildet ist, dass, falls kein Navigationsbefehl in einem vorgegebenen Zeitraum vor dem festgestellten Verlassen der ersten Route ausgegeben wurde, entschieden wird, dass ein Verkehrshindernis (5) auf der ersten Route vorliegt.

16. Navigationssystem nach einem der Ansprüche 10 bis 15, wobei das Verkehrshindernis (5) auf einem noch nicht befahrenen Streckenabschnitt (8) der ersten Route liegt.

17. Navigationssystem nach einem der Ansprüche 10 bis 16, wobei die Routenberechnungseinrichtung (23) so ausgebildet ist, dass die Berücksichtigung eines Verkehrshindernisses (5) beim Festlegen der neuen Route umfasst, dass soweit möglich ein noch zu befahrender Streckenabschnitt (8) der ersten Route, von dem abgewichen wurde, auf einer vorgebbaren Länge nicht in die neue Route (6) aufgenommen wird, sondern dieser Streckenabschnitt (8) in der neuen Route durch andere Streckenabschnitte umgangen wird.

18. Navigationssystem nach Anspruch 17, wobei dieser Streckenabschnitt (8) in der neuen Route durch andere Streckenabschnitte so umgangen wird, dass die Länge der anderen Streckenabschnitte, mit welchen der Streckenabschnitt (8) umgangen wird, zusammen nicht mehr als das Produkt eines vorgegebenen Faktors und der Länge oder der berechneten voraussichtlichen Fahrtdauer des Streckenabschnittes aufweisen.
